# FASCICULE DE BREVET EUROPEEN

(11) **EP 1 462 277 B1**
(45) Date de publication et mention de la délivrance du brevet: **24.09.2008**
(21) Numéro de dépôt: 04006652.4
(22) Date de dépôt: 19.03.2004
(51) Int. Cl.: B60C 13/00, B60C 11/00, B29C 33/42, B29C 59/02, B81B 1/00, B30B 15/06

(54) **Pneumatique comprenant un motif coloré et procédé d'obtention**
Reifen mit farbigem Muster und Verfahren zur Herstellung
Tyre with colored pattern and manufacturing method

(30) Priorité: 28.03.2003 FR 0303907
(43) Date de publication de la demande: 29.09.2004
(73) Titulaire: Société de Technologie Michelin, 63000 Clermont-Ferrand (FR); Michelin Recherche et Technique S.A., 1763 Granges-Paccot (CH)
(72) Inventeur: Paturle, Antoine, 63430 Pont du Chateau (FR); Delbet, Cédric, 63000 Clermont-Ferrand (FR)
(74) Mandataire: Diernaz, Christian

(56) Documents cités:
- US-A- 4 444 713
- US-A1- 2002 029 814
- PATENT ABSTRACTS OF JAPAN vol. 2000, no. 09, 13 octobre 2000 (2000-10-13) & JP 2000 153675 A (TOPPAN PRINTING CO LTD), 6 juin 2000 (2000-06-06)

## Description

L'invention concerne un procédé d'obtention d'un motif décoratif pouvant être vu en couleur non noire et formant contraste sur un objet en matériau caoutchoutique de couleur essentiellement noire. Elle concerne également un pneumatique comportant sur l'une de ses surfaces extérieures un motif pouvant être vu d'au moins une couleur différente du noir.

Dans de nombreuses industries, on cherche à marquer des produits ou objets avec des inscriptions, logos et dessins divers dont une des fonctions est d'attirer l'attention de futurs utilisateurs ou acheteurs par exemple au cours de présentations dans des salons.

Ce problème se pose tout particulièrement sur les objets en caoutchouc de couleur noire comme, par exemple, des pneumatiques ou des chenilles.

Un moyen d'y parvenir est de déposer à la surface de ces produits un film de couleur contrastant avec la couleur noire ; c'est ce qui a été proposé dans le brevet US 5904794 selon lequel on prépare une décalcomanie comportant un motif coloré avant de l'appliquer sur la surface externe d'une ébauche de pneumatique avant son moulage et sa vulcanisation. Si ce procédé permet effectivement d'obtenir certes un motif de couleur contrastant sur la surface de couleur noire, ce motif présente toujours la même couleur quelle que soit l'orientation choisie pour regarder ledit pneumatique et quelle que soit l'orientation de l'éclairage. Les produits en caoutchouc noir comportant une telle décalcomanie ont un pouvoir attractif insuffisant.

Dans le cas d'un pneumatique, le film de couleur est soit lié directement avec le caoutchouc du pneumatique soit par l'intermédiaire d'une couche de liaison assurant le collage de ce film sur le pneumatique. Outre les difficultés de mise en oeuvre, on peut rencontrer avec cette technique des problèmes liés à une insuffisance de la liaison entre la décalcomanie et le pneumatique et alors une perte de ladite décalcomanie.

Dans un autre brevet EP-B-1152904, divulguant un pneumatique selon le préambule de la revendication 1 et un procédé selon la revendication 8, on réalise sur un objet en caoutchouc un motif de plusieurs couleurs au moyen d'un laser agissant sur un mélange de caoutchouc vulcanisé de couleur noire auquel est incorporé au moins une charge d'une couleur contrastant avec le noir.

Ce dernier procédé comme le précédent cité ne permet que la formation d'un motif présentant les mêmes couleurs quelle que soit l'orientation selon laquelle l'objet en caoutchouc est vu ; par ailleurs il nécessite d'incorporer au matériau des charges colorées qui sont révélées par laser une fois le pneumatique moulé et vulcanisé.

Un objet de l'invention est un pneumatique en matériau à base de caoutchouc de couleur noire comportant au moins un motif sur une surface externe dudit pneumatique, ce matériau étant un élastomère ou caoutchouc diénique, c'est-à-dire un élastomère issu d'au moins une partie de monomères diènes, ce motif pouvant être vu avec au moins une couleur différente de la couleur noire du matériau à base de caoutchouc, ce motif comprenant sur sa surface externe au moins un réseau de diffraction de la lumière formé par une pluralité de micro stries (nervures ou rainures) de hauteur H et disposées parallèlement les unes aux autres avec un pas P.

Préférentiellement, le pas P est inférieur ou égal à 1.5 micron et la hauteur H est au plus égale à 1 micron, car l'effet de diffraction disparaît au-delà de ces limites. Plus préférentiellement, H est compris entre 0.1 et 0.3 micron et P est compris entre 0.5 et 0.7 micron ; encore plus préférentiellement, H est compris entre 0.17 et 0.23 micron et P est égal à 0.6 micron. Ces paramètres peuvent avantageusement être déterminés en fonction de l'indice optique du matériau sur lequel est formé ledit motif.

Préférentiellement, les parties dudit pneumatique qui comportent un motif sont réalisées dans un matériau dépourvu de cires et agents anti-ozonant ou anti-oxydant ayant tendance à migrer et à former une couche de protection sur la surface externe du pneu, car la présence d'une telle couche réduit l'effet optique produit par le réseau de diffraction.

L'objet de l'invention est également un procédé par lequel une surface d'un objet en caoutchouc vulcanisé de couleur sombre ou noire (notamment, mais non exclusivement, un pneumatique, une chenille, une bande de roulement) est pourvue d'au moins un motif qui peut être vu avec des couleurs plus ou moins vives et changeantes selon l'orientation choisie pour regarder ledit motif ou selon la position de la source d'éclairage par rapport à la surface de l'objet de manière à générer un plus grand attrait du motif et de l'objet.

Ce problème est particulièrement difficile à résoudre sans modification des formules des mélanges de caoutchouc composant les pneumatiques et compte tenu de la présence de certains des composants indispensables comme les charges de renforcement desdits mélanges sous forme d'agrégats de noir de carbone ou de silice dont la taille moyenne est de l'ordre du ou plus grande que le dixième de micron. Par ailleurs, il est connu que les mélanges usuels du pneumatique ne réfléchissent qu'une très petite quantité de la lumière reçue (moins de 10%).

Selon l'invention, il est proposé un procédé d'obtention, sur une surface externe d'un objet en caoutchouc vulcanisé de couleur noire, d'un motif de couleur variable par exemple en fonction de l'orientation selon laquelle ledit objet est vu. Ce procédé comprend essentiellement les étapes suivantes :
- préparation d'un motif de base sur un support, ce motif ayant la forme du motif que l'on désire reproduire sur la surface externe de l'objet en caoutchouc, la surface de ce motif de base étant formée par au moins un réseau de microstructures (micro stries) défini par un pas P et une profondeur H, lesdits pas P et profondeur H étant inférieurs à 1 micron de manière à former un réseau de diffraction ;
- mise en place du support pourvu du motif de base sur la surface de moulage d'un moule pour le moulage d'un objet en caoutchouc ;
- réalisation d'une ébauche de l'objet en caoutchouc non vulcanisé et non moulé ;
- moulage dans le moule d'un objet en caoutchouc par mise en pression contre la surface dudit moule et vulcanisation du matériau caoutchoutique.

De manière surprenante compte tenu du matériau caoutchouc et de ses caractéristiques optiques spécifiques comme rappelé plus haut, il est possible, grâce à ce procédé, d'obtenir à la surface d'un objet en caoutchouc de couleur noire un motif vu avec au moins une couleur différente du noir et ayant le contour du motif désiré, la surface dudit motif étant formée d'un réseau de très fines stries formant un réseau de diffraction optique ayant un effet à deux dimensions voire même à trois à la manière d'un hologramme.

Il a été constaté qu'une surface totalement noire d'un mélange de caoutchouc pourvue d'un tel réseau de microstructures présentait l'avantage d'être vue avec des couleurs différentes selon l'orientation de l'éclairage choisie ainsi que selon l'angle d'observation dudit motif. La source d'éclairage peut également modifier la couleur perçue.

En fait, lorsqu'un observateur se déplace par rapport à l'objet, la lumière réfléchie par ledit objet et plus particulièrement par le réseau de stries produit des variations de longueur d'onde captée par l'oeil : il est ainsi possible, sans changer la nature des matériaux et sans rapporter un corps "étranger" à la surface de l'objet (notamment par métallisation), de réaliser un marquage dont la couleur peut être changeante et fortement contrastée par rapport à la couleur noire du matériau caoutchouc.

Par matériau caoutchouc ou caoutchoutique, on entend un élastomère ou caoutchouc 'diénique', c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Selon le matériau caoutchouc considéré, les paramètres de définition du réseau de microstructures (à savoir le pas P et la hauteur H) peuvent être avantageusement établis à partir de l'indice optique dudit matériau.

Le profil du réseau de diffraction moulé sur l'objet en caoutchouc peut être, notamment, choisi parmi les formes suivantes : forme carrée ou rectangulaire ou sinusoïdale ou triangulaires. Préférentiellement, la hauteur H est au plus égale à 1 micron et le pas est au plus égal à 1 micron. Selon un mode de réalisation préférentiel, la hauteur H est comprise entre 0.1 et 0.3 micron et le profil du réseau de diffraction est carré, rectangulaire ou sinusoïdal. Un profil carré ou rectangulaire est obtenu par une gravure de type micro-électronique, un profil sinusoïdal par une gravure de type holographique. Ce dernier procédé d'obtention étant le plus courant et le moins coûteux, on choisira préférentiellement un profil sinusoïdal.

D'autres caractéristiques et avantages de l'invention ressortent de la description faite ci-après en référence au dessin annexé lequel montre, à titre d'exemple non limitatif, une forme de réalisation d'un marquage sur un pneumatique.

Selon ce dessin :
- la figure 1 montre la surface d'un flanc de pneumatique comportant un motif moulé et pouvant être vu selon des couleurs à fort contraste par rapport à la couleur noire du flanc ;
- la figure 2 montre une vue en coupe de la surface du pneumatique montré à la figure 1 ;
- les figures 3 et 4 montrent, sous deux angles d'incidence différents, une même surface d'un flanc de pneumatique pourvue d'un motif composé d'une pluralité de parties, chaque partie ayant son propre réseau de micro structures.

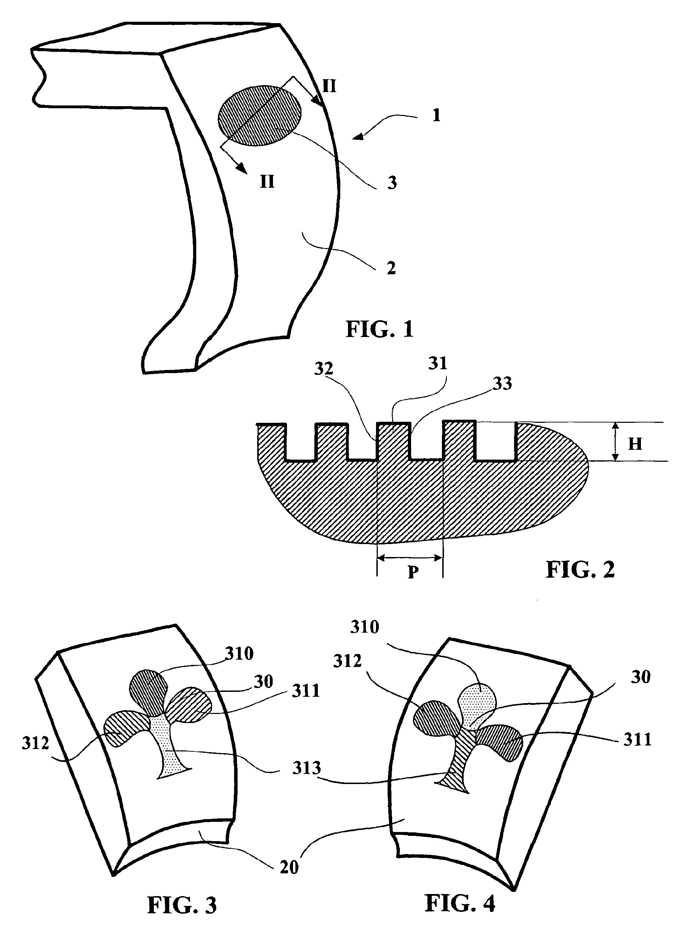

La figure 1 montre une vue partielle d'un flanc d'un pneumatique 1 de couleur noire sur la surface 2 duquel on a, au moment du moulage dudit pneumatique, formé avec le procédé de l'invention un motif 3 constitué d'un réseau unique de microstructures.

Ce motif peut être vu avec des couleurs fortement contrastées par rapport à la couleur noire de la surface 2. Selon l'orientation choisie, il est possible que ce motif apparaisse en noir, dès lors que la lumière reçue n'est pas diffractée par le réseau de microstructures.

Sur la figure 2, on voit une coupe selon la ligne II-II traversant le motif 3 à la figure 1. On distingue une pluralité de nervures 31 séparées entre elles par des rainures ; ces nervures de forme de section carrée ont une hauteur H et sont disposées parallèlement les unes aux autres avec un pas P. Grâce à ce réseau, il est possible de diffracter la lumière arrivant sur les faces latérales 32 et 33 des nervures 31 de manière optimale, c'est-à-dire en concentrant pour au moins une longueur d'onde donnée toute l'énergie réfléchie, quand bien même cette énergie est faiblement réfléchie par un matériau à base de caoutchouc de couleur essentiellement noire.

Compte tenu de la nature spécifique des matériaux de flanc à base de caoutchouc, les réseaux de microstructures ou de diffraction formant la surface du motif sont constitués d'une série de nervures sensiblement parallèles les unes aux autres et ayant une hauteur H sensiblement égale à 0.2 micron et disposées avec un pas P sensiblement égal à 0.6 micron.

Les résultats obtenus sont particulièrement surprenants compte tenu du fait que le caoutchouc ne réfléchit que très peu de la lumière ; on observe une couleur "flash" assez intense voire même très intense dans un angle très étroit.

Pour un matériau caoutchouc donné, il est possible de déterminer les nuances de couleurs qu'il est possible d'obtenir. En effet, le paramètre de profondeur H a un rôle direct sur les couleurs perçues tandis que le pas P des micro stries et la forme du profil du réseau ont chacun une incidence directe sur l'intensité avec laquelle le motif est vu.

Pour obtenir ce pneumatique 1 avec un motif 3 pouvant être vu en couleur non noire, on procède de la manière suivante :
- réalisation d'un modèle "maître" dans une résine photosensible par exposition holographique du motif afin d'obtenir un réseau de micro structure ;
- fabrication d'une réplique dite de base par croissance galvanique Nickel sur ce modèle maître ;
- mise en place de cette réplique de base dans un logement prévu sur le moule du pneumatique ;
- introduction d'un pneumatique non moulé et non vulcanisé dans ledit moule pour mouler et vulcaniser ledit pneumatique.

Selon un mode de réalisation préférentiel, ayant pour but de faciliter la mise en oeuvre, la réplique en nickel obtenue dans la deuxième étape du procédé est collée sur un insert métallique, préférentiellement en acier inoxydable, avant sa mise en place dans le moule. Le collage se fait à l'aide d'une colle silicone qui favorise l'accrochage physique entre l'insert en l'acier et la réplique, ce type de colle étant plus robuste que les colles créant un ancrage chimique. Ensuite, l'insert en acier est rapporté sur le moule de vulcanisation.

Selon un autre mode de réalisation préférentiel, on forme au moins une réplique du motif à partir de la réplique de base par moulage dans un matériau compatible avec les conditions de pression et température du moulage et de la vulcanisation du pneumatique comme par exemple des plastiques ou des thermoplastiques. Préférentiellement, on utilise un thermoplastique ayant de très bonnes propriétés thermiques, même à haute température (à titre d'exemple, le polyétheréthercétone (PEEK)) et présentant l'avantage de bien reproduire la finesse des réseaux de diffraction. Il est réalisé à l'aide d'un moule d'injection possédant une face revêtue de la réplique en nickel. Ce procédé s'avère très économique, car l'utilisation d'un unique modèle en nickel permet de réaliser de nombreuses répliques en thermoplastique.

Pour accroître encore l'effet visuel de perception, il est avantageux de décomposer le motif en plusieurs parties, chaque partie comportant son propre réseau de diffraction et
caractérisé en ce que au moins deux parties ont des micro stries dont l'orientation moyenne est différente.

Par exemple, les figures 3 et 4 montrent une même partie 20 d'un flanc de pneumatique vue suivant deux angles d'incidence différents. Cette partie 20 est pourvue en surface avec un motif 30 formé dans le cas présent de quatre parties 310, 311, 312, 313 se complétant pour former ledit motif, chaque partie ayant son réseau propre de diffraction caractérisé par : un profil de réseau, une hauteur H et un pas P.

Dans le cas présent, toutes ces parties 310, 311, 312, 313 ont le même réseau de micro stries (en forme, en hauteur H et pas P), seul change l'orientation moyenne desdites stries. Préférentiellement, l'écart d'angle est au moins de 10°. Ainsi, on obtient un motif 30 qui, lorsqu'il est vu suivant une première incidence (par exemple, figure 3), montre des couleurs différentes pour chacune des parties 310, 311, 312, 313 le composant. Par ailleurs, lorsque ce même motif 30 est vu suivant un autre angle d'incidence (par exemple, figure 4), chaque partie présente une couleur différente comparée à la couleur de la même partie vue suivant le première angle d'incidence.

À noter que la couleur du motif change également en fonction de la courbure prise par le flanc du pneumatique (exemple dans le passage dans le contact la courbure des flancs augmente et la couleur du motif vu par un observateur externe change).

L'invention n'est pas limitée aux exemples décrits et représentés et diverses modifications peuvent y être apportées sans sortir de son cadre. En particulier, lorsque le matériau n'est pas de couleur noire, par exemple de couleur grise, l'effet de couleur obtenu, bien que sensiblement moins visible car moins contrasté par rapport à cette couleur, est toutefois, présent.

## Revendications

1. Pneumatique (1) en matériau à base de caoutchouc de couleur noire comportant au moins un motif (3) sur une surface externe dudit pneumatique, ce matériau étant un élastomère ou caoutchouc diénique, c'est-à-dire un élastomère issu d'au moins une partie de monomères diènes, ce motif (3) pouvant être vu avec au moins une couleur différente de la couleur noire du matériau à base de caoutchouc, **caractérisé en ce que** ce motif (3) comprend sur sa surface externe au moins un réseau de diffraction (31) de la lumière formé par une pluralité de micro stries de hauteur H et disposées parallèlement les unes aux autres avec un pas P.

2. Pneumatique (1) selon la revendication 1 **caractérisé en ce que** la hauteur H est inférieure ou égale à 1 micron et leur pas P est inférieur ou égal à 1.5 micron.

3. Pneumatique selon la revendication 1 **caractérisé en ce que** la hauteur H est comprise entre 0.17 et 0.23 micron.

4. Pneumatique selon l'une des revendications 1 à 3 **caractérisé en ce qu'**un même motif (30) est formé d'au moins deux parties, chaque partie comportant en surface un réseau de diffraction (310, 311, 312, 313) formé d'une pluralité de micro stries, les orientations des stries desdits réseaux étant différentes entre elles.

5. Pneumatique selon la revendication 4 **caractérisé en ce que** la différence entre les angles des stries d'une partie de motif et d'une autre partie du même motif est au moins égale à 10°.

6. Pneumatique selon l'une des revendications 1 à 4 **caractérisé en ce qu'**un motif présente sur sa surface visible au moins un réseau de diffraction dont les caractéristiques permettent de voir un hologramme, c'est-à-dire une image en trois dimensions.

7. Pneumatique selon l'une des revendications 1 à 6 **caractérisé en ce que** le matériau du pneumatique, sur lequel ledit motif est disposé, est dépourvu de cires et agents anti-ozonant ou anti-oxydant.

8. Procédé d'obtention d'un motif de couleur variable sur un objet en matériau à base de caoutchouc de couleur noire, ce matériau étant un élastomère ou caoutchouc diénique, c'est-à-dire un élastomère issu d'au moins une partie de monomères diènes, ce motif pouvant être vu avec au moins une couleur différente de la couleur de base unique du matériau caoutchoutique, ce procédé étant **caractérisé par** les étapes suivantes :
- préparation du motif de base sur un support, ce motif comportant une surface externe et sur une partie de ladite surface au moins un réseau de micro stries appropriées pour former un réseau de diffraction de la lumière reçue à la surface de l'objet ;
- mise en place du support avec le motif de base sur un moule pour le moulage d'un objet en caoutchouc, la surface externe du motif, pourvue du réseau de micro stries, étant placée de manière à être en contact avec l'objet à mouler ;
- réalisation d'une ébauche de l'objet en caoutchouc non vulcanisé et non moulé ;
- introduction de l'ébauche dans le moule pour moulage et vulcanisation du matériau caoutchoutique.

9. Procédé selon la revendication 8 **caractérisé en ce que** le motif de base est reproduit sur une réplique en nickel et **en ce que** cette réplique est collée sur un support métallique.

10. Procédé selon la revendication 8 **caractérisé en ce que** le motif de base est reproduit sur un support en matériau thermoplastique capable de supporter les pressions et températures de moulage et de vulcanisation.

11. Procédé selon l'une des revendications 8 à 10 **caractérisé en ce que** le réseau de diffraction formant au moins une partie du motif est composé d'une pluralité de micro stries parallèles entre elles, de hauteur moyenne H et disposées selon un pas P, ledit pas P étant égal ou inférieur à 1.5 micron et ladite profondeur H étant égale ou inférieure à 1 micron.

## Claims

1. Tyre (1) made of a rubber-based material of black colour comprising at least one design (3) on an outer surface of the said tyre, this material being a diene elastomer or rubber, i.e. an elastomer obtained at least in part from diene monomers, the design (3) being visible in at least one colour different from the black colour of the rubber-based material, **characterised in that** the design (3) has on its outer surface at least one light diffraction grating (31) formed by a plurality of ridges (33) or grooves (32) of height H arranged parallel to one another with a period P.

2. Tyre according to Claim 1, **characterised in that** the height H of the ridges (33) is less than or equal to 1 micron and their period P is less than or equal to 1.5 micron.

3. Tyre according to Claim 1, **characterised in that** the height H is between 0.17 and 0.23 micron.

4. Tyre according to any of Claims 1 to 3, **characterised in that** one same design (30) is formed of at least two portions, each portion having at its surface a diffraction grating (310, 311, 312, 313) formed of a plurality of striations, the orientations of the striations of the said gratings being different from one another.

5. Tyre according to Claim 4, **characterised in that** the difference between the angles of the striations in one portion of the design and in another portion of the same design is at least equal to 10°.

6. Tyre according to any of Claims 1 to 4, **characterised in that** a design has on its visible surface at least one diffraction grating whose characteristics enable a hologram to be seen, i.e. an image in three dimensions.

7. Tyre according to any of Claims 1 to 6, **characterised in that** the tyre material on which the said design is arranged is free from waxes and anti-ozone or anti-oxidant agents.

8. Process for obtaining a design of variable colour on an article made from a rubber-based material of black colour, this material being a diene elastomer or rubber, i.e. an elastomer obtained at least in part from diene monomers, the design being visible in at least one colour different from the uniform basic colour of the rubber material, the said process being **characterised by** the following stages:
- preparation of the basic design on a support, this design having an outer surface and, on part of the said surface, at least one set of microstructures appropriate for forming a diffraction grating for the light received at the surface of the article;
- positioning of the support with the basic design on a mould for moulding a rubber article, the outer surface of the design provided with the set of microstructures being positioned so as to be in contact with the article to be moulded;
- production of an unvulcanised and unmoulded blank for the rubber article;
- introduction of the blank into the moulding mould and vulcanisation of the rubber material.

9. Process according to Claim 8, **characterised in that** the basic design is reproduced on a nickel replica and this replica is stuck to a metallic support.

10. Process according to Claim 8, **characterised in that** the basic design is reproduced on a support made from a thermoplastic material that can withstand the pressures and temperatures of moulding and vulcanisation.

11. Process according to any of Claims 8 to 10, **characterised in that** the set of microstructures forming at least part of the design is composed of a plurality of ridges (or grooves) parallel to one another, of mean height H and arranged with a period P, the said period P being equal to or smaller than 1.5 micron and the said depth H being equal to or smaller than 1 micron.

## Patentansprüche

1. Reifen (1) aus einem Material auf Kautschukbasis von schwarzer Farbe, der mindestens ein Motiv (3) auf einer Außenoberfläche des Reifens aufweist, wobei das Material ein Dienelastomer oder -kautschuk ist, d.h. ein Elastomer, das aus mindestens einem Teil Dienmonomeren hervorgegangen ist, wobei das Motiv (3) mit mindestens einer anderen Farbe als der schwarzen Farbe des Materials auf Kautschukbasis zu sehen ist, **dadurch gekennzeichnet, dass** das Motiv (3) an seiner Außenoberfläche mindestens ein Lichtbeugungsgitter (31) aufweist, das von mehreren Mikrofurchen mit einer Höhe H gebildet ist, die parallel zueinander mit einer Teilung P angeordnet sind.

2. Reifen (1) nach Anspruch 1, **dadurch gekennzeichnet, dass** die Höhe H kleiner oder gleich groß wie 1 Mikron ist und die Teilung P kleiner oder gleich groß wie 1,5 Mikron ist.

3. Reifen nach Anspruch 1, **dadurch gekennzeichnet, dass** die Höhe H zwischen 0,17 und 0,23 Mikron beträgt.

4. Reifen nach einem der Ansprüche 1 bis 3, **dadurch gekennzeichnet, dass** ein und dasselbe Motiv (30) aus mindestens zwei Abschnitten gebildet ist, wobei jeder Abschnitt an der Oberfläche ein Beugungsgitter (310, 311, 312, 313) aufweist, das aus mehreren Mikrofurchen gebildet ist, wobei sich die Ausrichtungen der Furchen der Beugungsgitter voneinander unterscheiden.

5. Reifen nach Anspruch 4, **dadurch gekennzeichnet, dass** die Differenz zwischen den Winkeln der Furchen von einem Abschnitt des Motivs und von einem anderen Abschnitt desselben Motivs mindestens gleich 10° ist.

6. Reifen nach einem der Ansprüche 1 bis 4, **dadurch gekennzeichnet, dass** ein Motiv an seiner sichtbaren Oberfläche mindestens ein Beugungsgitter aufweist, dessen Eigenschaften es ermöglichen, ein Hologramm, d.h. ein dreidimensionales Bild, zu sehen.

7. Reifen nach einem der Ansprüche 1 bis 6, **dadurch gekennzeichnet, dass** das Material des Reifens, auf dem das Motiv angeordnet ist, frei von Wachsen und von Ozonschutz- oder Antioxidationsmitteln ist.

8. Verfahren zum Erhalten eines Motivs von variabler Farbe auf einem Gegenstand aus einem Material auf Kautschukbasis von schwarzer Farbe, wobei das Material ein Dienelastomer oder -kautschuk ist, d.h. ein Elastomer, das aus mindestens einem Teil Dienmonomeren hervorgegangen ist, wobei das Motiv mit mindestens einer anderen Farbe als der einheitlichen Grundfarbe des Kautschukmaterials zu sehen ist, wobei das Verfahren durch die folgenden Schritte **gekennzeichnet** ist:
- das Herstellen des Grundmotivs auf einem Träger, wobei das Motiv eine Außenoberfläche und auf einem Abschnitt dieser Oberfläche mindestens ein Gitter aus Mikrofurchen aufweist, die dazu geeignet sind, ein Beugungsgitter für das an der Oberfläche des Gegenstands einfallende Licht zu bilden;
- das Anordnen des Trägers mit dem Grundmotiv auf einer Form zum Formen eines Kautschukgegenstands, wobei die Außenoberfläche des Motivs, die mit dem Gitter aus Mikrofurchen versehen ist, derart angeordnet wird, dass sie in Kontakt zu dem zu formenden Gegenstand steht;
- das Herstellen eines Rohlings des Gegenstands aus Kautschuk, der nicht vulkanisiert und geformt ist;
- das Einbringen des Rohlings in die Form zum Formen und Vulkanisieren des Kautschukmaterials.

9. Verfahren nach Anspruch 8, **dadurch gekennzeichnet, dass** das Grundmotiv auf einer Nickelabformung reproduziert wird und die Abformung auf einem Metallträger aufgeklebt wird.

10. Verfahren nach Anspruch 8, **dadurch gekennzeichnet, dass** das Grundmotiv auf einem Träger aus einem thermoplastischen Material reproduziert wird, der dazu imstande ist, die Drücke und Temperaturen der Formung und Vulkanisierung auszuhalten.

11. Verfahren nach einem der Ansprüche 8 bis 10, **dadurch gekennzeichnet, dass** das Beugungsgitter, das mindestens einen Abschnitt des Motivs bildet, aus mehreren Mikrofurchen gebildet ist, die zueinander parallel sind, eine mittlere Höhe H aufweisen und gemäß einer Teilung P angeordnet sind, wobei die Teilung P kleiner oder gleich groß wie 1,5 Mikron ist und die Tiefe H kleiner oder gleich groß wie 1 Mikron ist.
